# EUROPEAN PATENT SPECIFICATION

(11) **EP 4 688 384 B1**
(45) Date of publication and mention of the grant of the patent: **25.11.2026**
(21) Application number: 24715687.0
(22) Date of filing: 25.03.2024
(51) Int. Cl.: B29C 53/02, B29L 31/56

(54) **METHOD AND APPARATUS FOR FOLDING CAPSULE GUARANTEE BANDS**
VERFAHREN UND VORRICHTUNG ZUM FALTEN VON KAPSEL-GARANTIEBÄNDERN
PROCÉDÉ ET APPAREIL DE PLIAGE DE BANDES DE GARANTIE DE CAPSULE

(30) Priority: 04.04.2023 IT 202300006621
(43) Date of publication of application: 11.02.2026
(73) Proprietor: SACMI COOPERATIVA MECCANICI IMOLA SOCIETA' COOPERATIVA, 40026 Imola (IT)
(72) Inventor: VENTURINI, Matteo, 40026 Imola (IT)
(74) Representative: Luppi Intellectual Property S.r.l.
(86) International application number: PCT/IB2024/052843
(87) International publication number: WO 2024/209302

(56) References cited:
- CN-A- 110 253 867
- US-A1- 2011 260 363

## Description

### Background of the invention

The invention relates to a method and an apparatus for folding flaps into guarantee bands for capsules for closing containers.

Specifically, but not exclusively, the invention may be applied to capsules of "tethered" type i.e. capsules that remain tethered to the container even after opening thereof. These capsules are generally provided with a protrusion that extends laterally outwards from the capsule.

In particular the invention relates to a method and an apparatus for folding the flaps from an initial configuration extending upwards and to the outside of the capsule to an end configuration folded downwards and to the inside of the capsule.

As known, the flaps of the guarantee bands are generally formed in an extended configuration and therefore have to be folded inwards in an end configuration of use, folded towards the inside of the capsule, in which they can interact with a ridge on a neck of the container.

The prior art comprises folding apparatuses that cause the flap to rotate about a hinge zone that connects the flap to the rest of the guarantee band. Patent publication US 2011/0260363 A1 shows an embodiment of a folding apparatus for folding flaps of guarantee bands. Patent publication CN 110253867 A discloses a method as in the preamble of claim 1.

### Summary of the invention

One object of the invention is to provide a method and an apparatus suitable for folding flaps of guarantee bands of capsules for closing containers that are alternative to those of the prior art.

One object of the invention is to devise a folding method and apparatus able to fold the flaps of the guarantee bands of capsules for closing containers from an initial configuration, in which the flap extends outside the capsule, to an end configuration of use, in which the flap is folded towards the inside of the capsule to enable coupling thereof with a ridge arranged on a neck of the container closed by the capsule.

One object of the invention is to provide a folding method and apparatus that is able to fold the flaps of guarantee bands of capsules provided with an outer protrusion, in particular with capsules of tethered type.

One advantage is to make available a constructionally simple and cheap apparatus for folding flaps of guarantee bands.

One advantage is to reduce the risk of misaligning the capsule with respect to the folding unit during the capsule-feeding motion.

One advantage is achieving correct folding of the flaps of the guarantee bands, in particular also in capsules provided with an outer protrusion (like, for example, capsules of "tethered" type).

One advantage is to reduce capsule production waste, in particular for capsules provided with an outer protrusion.

Such objects and advantages and still others are achieved by the method and by the folding apparatus according to one or more of the claims set out below.

### Brief description of the drawings

The invention can be better understood and implemented with reference to the enclosed drawings that illustrate some embodiments thereof by way of non-limiting example, in which:
Figure 1 is a raised vertical section of a first embodiment of a folding apparatus, made according to the present invention, in a first operating step;
Figures 2 to 6 show the apparatus of Figure 1 in a sequence of five operating steps following the first step;

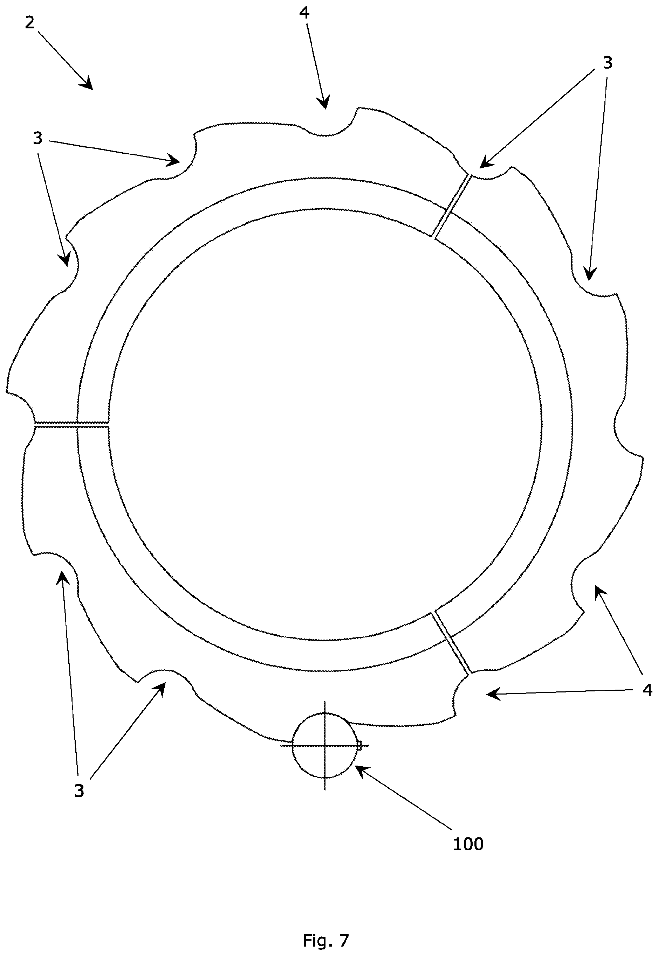

Figure 7 is a top plan view of the capsules star conveyor that is part of the apparatus of Figures 1-6;

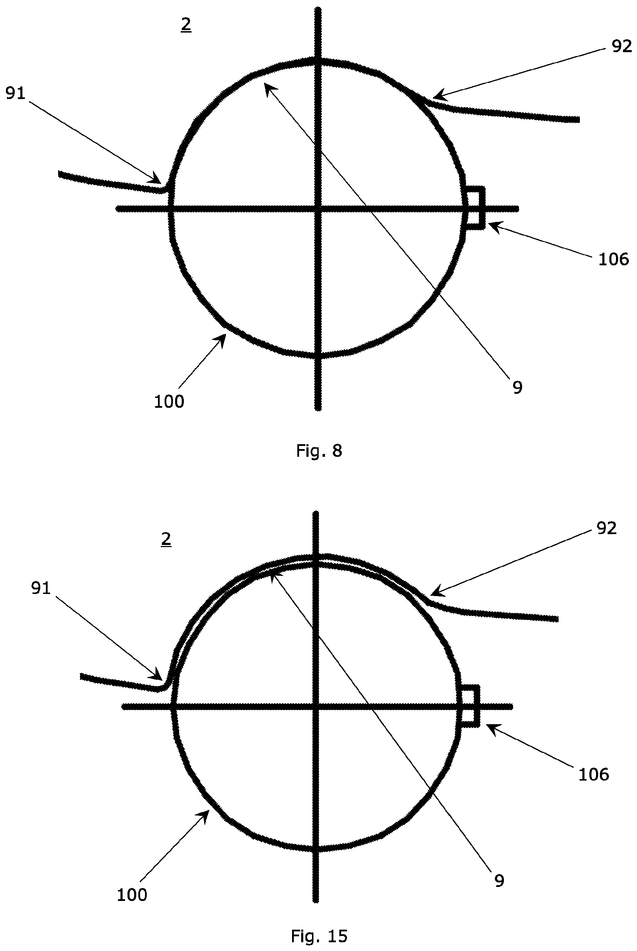

Figure 8 is an enlarged detail of Figure 7;
Figure 9 is a section in a vertical elevation of a second embodiment of a folding apparatus, made according to the present invention, in a first operating step;
Figures 10 to 14 show the apparatus of Figure 9 in a sequence of five operating steps following the first step;
Figure 15 is an enlarged detail of a top plan view of the capsules star conveyor that is part of the apparatus of Figures 9-14;
Figure 16 is a top plan view of a capsule star conveyor usable in a folding apparatus made according to the present invention, highlighting the positions of the six operating steps 1-6 shown in Figures 1-6 and in Figures 10-15;

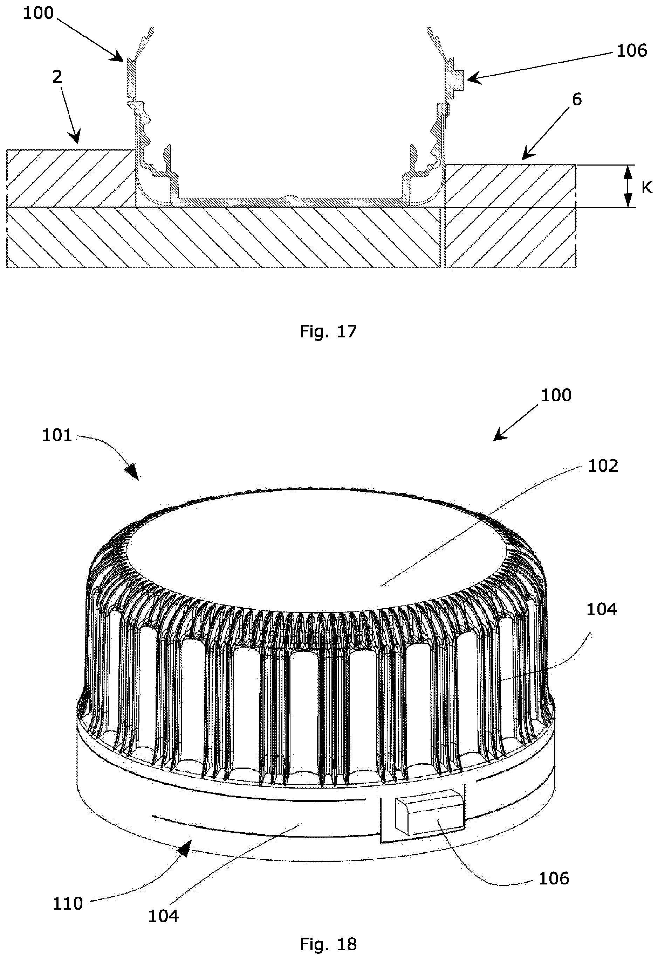

Figure 17 is the section XVII-XVII of Figure 16;
Figure 18 is a perspective view of a capsule processable by a folding apparatus, made according to the present invention, suitable for folding the flap of the guarantee band of the capsule;

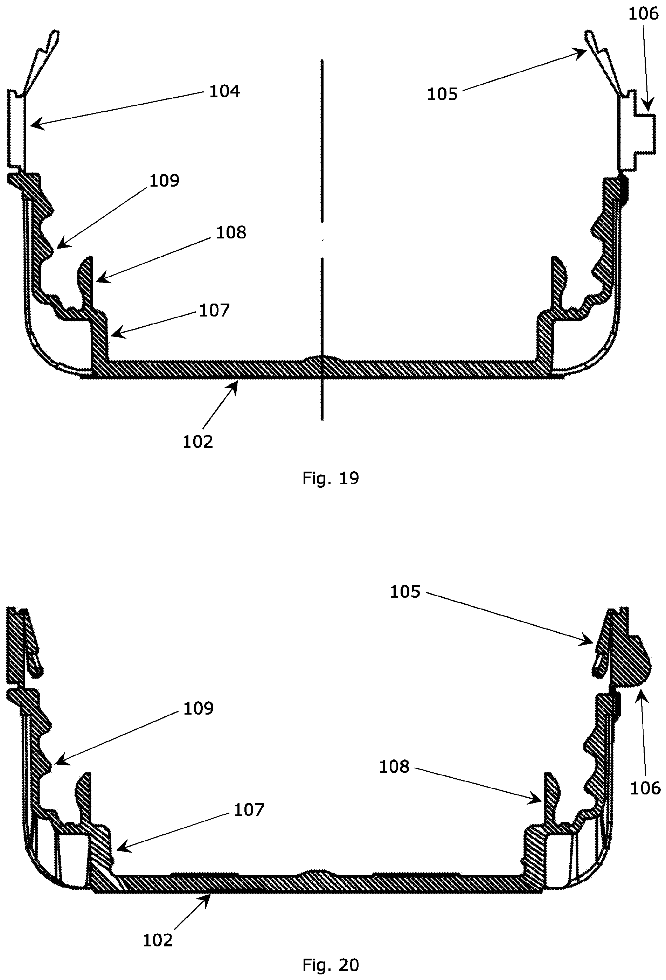

Figure 19 is a section in vertical elevation of the capsule of Figure 18 in which the flap is in an extended configuration before folding;
Figure 20 is the section of Figure 19 in which the flap of the capsule is in a folded configuration after folding.

### Detailed description

For ease of exposition, identical elements of different embodiments will be indicated below by the same reference numbers.

A folding apparatus used for folding flaps of guarantee bands of capsules for closing containers has been indicated overall with 1, in which the flaps are folded from an initial configuration extending upwards to an end configuration folded downwards inside the capsule.

The folding apparatus 1 may be used, in particular for capsules made of plastics. The folding apparatus 1 may be used, in particular for capsules of "tethered" type i.e. capsules that remain tethered to the container even after the container has been opened.

In Figures 21-23, an embodiment is illustrated of a capsule 100 that could be processed by the folding apparatus 1. The capsule 100 may comprise, in particular, a cup-shaped body 101 with an end wall 102. The cup-shaped body 101 may comprise, further, a side wall 103 connected to the end wall 102. The capsule 100 may comprise, further, a guarantee band 104 connected to the side wall 103 and provided with a flap 105 to be folded. The capsule 100 may be of "tethered" type and may be provided with a protrusion 106 that extends laterally outwards from the capsule 100, in particular from the side wall 103 or from the guarantee band 104 of the capsule 100.

The capsule 100 may comprise, in particular, a first inner surface 107 consisting of an inner surface of a gasket of the capsule 100 arranged on the end wall 102. The capsule 100 may comprise, in particular, a second inner surface108 consisting of an inner surface of an annular protrusion of the capsule which protrudes axially inside the cup-shaped body 101. The capsule 100 may comprise, in particular, a third inner surface 109 consisting of an inner surface of an internal thread of the capsule 100.

The capsule 100 may comprise, in particular, a plurality of incision lines 110 arranged on the guarantee band 104 and configured so as to leave the capsule tethered to the container after opening of the container.

The folding apparatus 1 comprises a star conveyor 2 rotatable about a vertical rotation axis X. The star conveyor 2 comprises, on its periphery, a plurality of angularly spaced apart housings 3 (which are in particular equidistant from one another). Each housing 3 comprises a lateral opening 4 configured for the entry of the capsule into the housing 3 and for the exit of the capsule from the housing 3.

The folding apparatus 1 comprises a path for the capsules. This path may provide, in particular, for the capsules being moved (by the star conveyor 2) along a horizontal movement plane (which remains motionless in a vertical direction, so that the cup-shaped body 101 of the capsule 100 does not move in a vertical direction, along the aforesaid path, apart from the flap 105 that is folded downwards).

This path is defined by a rotation (about the vertical axis) of the star conveyor 2. This path comprises an inlet IN where the star conveyor 2 receives the capsules, one at a time. This path comprises an outlet OUT where the star conveyor 2 yields the capsules, one at a time, outside the star for possible subsequent processing.

The folding apparatus 1 comprises a horizontal support plane 5 configured to remain motionless in a vertical direction. The support plane 5 is configured to receive restingly a capsule received in a housing 3 of the star conveyor 2. The support plane 5 may be, in particular, integrated into the star conveyor 2 to rotate integrally with the star.

The folding apparatus 1 comprises a fixed guide 6 shaped like a circumference arc and arranged along a portion of the path of the capsules to guide laterally each capsule received in a housing 3 of the star conveyor 2 and rotated along the path by the star conveyor 2.

The folding apparatus 1 comprises, for each housing 3, a locking element 7 which can be inserted inside a capsule received in the respective housing 3 to lock the capsule in position between the locking element 7 and the support plane 5. The locking element 7 is configured to be inserted by performing a combined movement which includes a rotation together with the star conveyor 2 and a translation from top to bottom to approach the capsule received in the housing 3.

The folding apparatus 1 comprises, for each housing 3, an annular shaped folding element 8 which can be inserted inside a capsule received in the respective housing 3 to fold a flap of a guarantee band of the capsule downwards. The folding element 8 is configured to be inserted by performing a combined movement which includes a rotation together with the star conveyor 2 and a translation from top to bottom to approach the capsule received in the housing 3.

The fixed guide 6 may, in particular, extend over a portion of the path of the capsules, in which this portion of path may be shaped as a circumference arc with the centre at the rotation axis of the star conveyor 2. This portion of circumference arc of longitudinal extent of the guide 6 may have a central angle of less than 120°. This portion of circumference arc of longitudinal extent of the guide 6 may have a central angle that is greater than 30°. This portion of path of longitudinal extent of the guide 6 may, in particular, extend at least as far as the point of the path of the capsules in which the locking element 7 locks the capsule in position against the support plane 5.

Each housing 3 of the star conveyor 2 may be, in particular, defined by an inner surface 9 intended for the lateral containment of a capsule. The aforesaid inner surface 9 of lateral containment may be, in particular, shaped as a cylinder portion with a rear end 91 and a front end 92, where "rear" and "front" refers to a rotation direction (indicated by an arrow F) of the star conveyor 2. The lateral opening 4 of each housing 3 may be, in particular, defined between the front end 92 and the rear end 91 of the inner surface 9 of the housing 3 of lateral containment of the capsule. A radial distance of the rear end 91 from the rotation axis X of the star conveyor 2 may be, in particular, greater than a radial distance of the front end 92 from the rotation axis X, so as to permit and promote the entry of the capsule into the housing 3 through the lateral opening 4 and/or the exit of the capsule from the housing 3 through the lateral opening 4.

As in these embodiments, it is possible to provide for a vertical height H of each housing 3 having, in particular less than 10 millimeters, i.e. less than the height of the lower end of the protrusion 106, so as to enable an outer protrusion of a capsule of "tethered" type conveyed by the star conveyor 2 not to interfere, during conveying along the path of the capsules, with the star conveyor 2. It is also possible to provide, as in these embodiments, for a vertical height K (measured from the horizontal surface of the support plane 5) of the lateral containment guide 6 of the capsules to be less than 10 millimeters, i.e. less than the height of the lower end of the protrusion 106, so as to enable an outer protrusion of the capsule (for example, a capsule of "tethered" type) conveyed by the star conveyor 2 not to interfere, during conveying along the path of the capsules, with the fixed guide 6.

The folding apparatus1 comprises, for each housing 3, an annular-shaped capsule-pressing element 10 that surrounds the respective folding element 8. The annular-shaped capsule-pressing element 10 is able to perform a combined movement which includes a rotation together with the star conveyor 2 and a translation from top to bottom to approach the capsule received in the housing 3 to interact in contact with an upper end of the capsule to promote the action of the folding element 8. The annular-shaped capsule-pressing element 10 and the folding element 8 may be, in particular, movable axially with respect to one another in a vertical axial direction. On the annular-shaped capsule-pressing element 10, elastic means 11 (for example a spring) is axially operational to control the axial pressure of the annular-shaped capsule-pressing element 10 against the upper end of the capsule.

The folding apparatus 1 comprises a carousel that rotates about the vertical axis X and that rotates the star conveyor 2 and a plurality of folding units W that are arranged spaced angularly apart from one another and each positioned on a vertical axis with respect to a centre of the corresponding housing 3 of the star conveyor 2. Each folding unit W is controlled to perform appropriate vertical movements (as will be explained better below) whilst it is rotated by the carousel. Each folding unit W comprises a locking element 7. Each folding unit W comprises a folding element 8. Each folding unit W may comprise, in particular, a capsule-pressing element 10.

The locking element 7 may comprise, in particular, a stem that is axially slidable within a hole obtained in the folding element 8. The capsule-pressing element 10 may comprise, in particular, a sleeve that is axially slidable with respect to a cylindrical portion of the folding element 8. The elastic means 11 may be, in particular, interposed between the capsule-pressing element 10 and the folding element 8, for example between a shoulder of the capsule-pressing element 10 and a flanged portion that is integral with the folding element 8.

In use, the folding apparatus 1 may implement, in particular, a folding method for folding the flaps of guarantee bands in capsules for closing containers. The method may be applied, in particular, to capsules of "tethered" type, i.e. capsules that remain connected to the container even after opening thereof. These capsules are, in general, provided with a protrusion that extends laterally outwards from the capsule.

The folding method comprises the step of rotating a star conveyor 2 about a vertical rotation axis X.

The folding method comprises, during the step of rotating the star conveyor 2, the step of supplying the capsules to the star conveyor 2.

Each capsule 100 is fed to the star conveyor 2 with a concavity of the cup-shaped body 101 facing upwards.

Each capsule 100 enters one of the housings 3 of the star conveyor through the respective lateral opening.

The folding method comprises the conveying step of conveying each capsule 100, via the star conveyor 2, along a path from an inlet IN, where the star conveyor 2 receives the capsules, to an outlet OUT, where the star conveyor 2 yields the capsules.

During transit along the path from the inlet IN to the outlet OUT, the end wall 102 of the capsule 100 rests on a horizontal support plane 5 which remains motionless in a vertical direction.

The capsule 100 is received in the respective housing 2 with a capsule-housing coupling between an outer surface of the side wall 103 of the capsule 100 and an inner surface 9 of the housing 3 that contains the capsule 100 laterally. This capsule-housing coupling is configured to have a radial clearance, between the aforesaid outer surface (capsule side) and the aforesaid inner surface 9 (star side), which is less than 0.4 mm, or, in particular less than 0.2 mm.

The capsule 100, during the conveying step, is guided laterally by a fixed guide (in particular the guide 6) shaped like a circumference arc and arranged outside the path of the capsules along a portion of the path.

During the capsule-conveying step, into each capsule 100 a locking element (in particular the locking element 7) is inserted inside the cup-shaped body 101 against the end wall 102 of the respective capsule to lock the capsule 100 in position between the locking element 7 and the support plane 5.

The locking element 7 is inserted whilst the element performs a combined movement which includes a rotation together with the star conveyor 2 about the vertical axis X and a translation to approach the capsule 100 from top to bottom.

During the capsule-conveying step, for each capsule 100 the flap 105 of the capsule 100 is folded downwards by means of an annular-shaped folding element (in particular the folding element 8) which folds the flap 105 while performing a combined movement which includes a rotation about the vertical axis X together with the star conveyor 2 and a translation to approach the capsule from top to bottom.

During the capsule-conveying step, after the aforesaid step of inserting the locking element 7 and after the aforesaid step of folding the flap 105, the locking element 7 and the folding element 8 are for each capsule 100 removed from the capsule 100 to enable the capsule to exit the star conveyor 2.

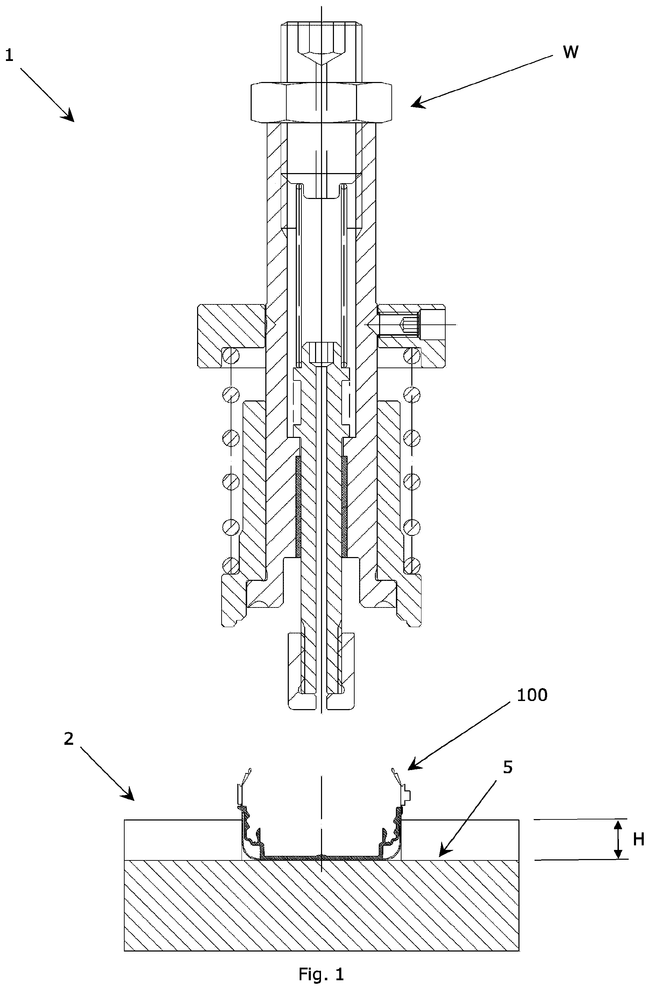

In one embodiment (Figures 1-6), the capsule-housing coupling comprises a precision coupling without radial clearance or with radial clearance less than 0.2 mm or with radial clearance less than 0.4 mm.

In this case, it is possible to provide a capsule-element coupling (i.e. a coupling between an inner surface of the capsule 100 and an outer centering surface of the locking element 7 that is inserted inside the cup-shaped body 101 of the respective capsule 100) that is a relatively imprecise coupling, i.e. with radial clearance greater than the radial clearance (which, as said, is nil or less than 0.2 mm or less than 0.4 mm) of the capsule-housing coupling. In particular, the capsule-element coupling may be greater than 1.0 mm, for example may be comprised between 1.0 and 3.0 mm or may also be greater than 3.0 mm.

A precision coupling enables the capsule 100 to be received in the housing 3 and conveyed by the star conveyor 2 to a centering position in which the axis of the capsule is exactly coaxial with the axis of the folding unit W to ensure a correct folding action for folding the flap 105.

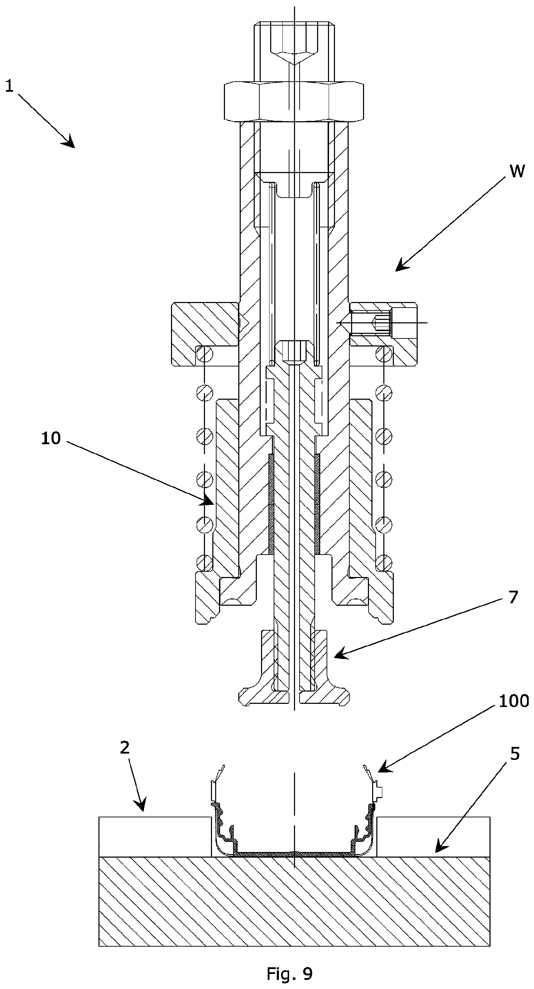

In another embodiment (Figures 9-14), the locking element 7 is inserted inside the cup-shaped body 101 of the respective capsule 100 with a capsule-element coupling (i.e. a coupling between an inner surface of the capsule and an outer centering surface of the locking element 7) that is a precision coupling with radial clearance less than 0.4 mm, in particular less than 0.2 mm or without radial clearance. In this case, it is possible to provide for also the capsule-housing coupling being relatively precise, so that a radial clearance of the capsule-housing coupling may be, in particular less than 0.4 mm, or less than 0.2 mm, or without radial clearance, or roughly equal to the radial clearance of the capsule-element coupling. Such a precision coupling between capsule and housing improves the possibility of performing the folding element operation correctly and precisely.

In this second embodiment, in which the capsule-element coupling is a precision coupling without radial clearance or with radial clearance less than 0.2 mm or less than 0.4 mm, the inner surface of the capsule, i.e. the surface of the capsule 100 which is coupled with an outer centering surface of the locking element 7, may comprise, in particular, an inner surface of a gasket of the capsule arranged on the end wall (like, for example, the first inner surface 107). In the embodiment illustrated in Figures 9-14, the inner surface of the capsule 100 which is coupled with the outer centering surface of the locking element 7 comprises, in fact, the first inner surface107.

In other embodiments that are not shown, the inner surface of the capsule 100 which is coupled with the outer centering surface of the locking element 7 may comprise, in particular, an inner surface of an annular protrusion of the capsule which protrudes axially inside the cup-shaped body (like, for example, the second inner surface 108), or an inner surface of an internal thread of the capsule (like, for example, the third inner surface109).

In still other embodiments, it is possible to configure a locking element with two or three outer centering surfaces configured to operate simultaneously with two or three inner capsule surfaces, for example according to couplings with any combination of the three inner capsule surfaces that have just been disclosed.

As said, the embodiment illustrated in Figures 9-14 corresponds to the first case mentioned, i.e. the case in which the outer centering surface of the locking element is coupled with an inner surface of a gasket of the capsule, whereas the other cases mentioned (i.e. the embodiment with centering on the second inner surface 108, the embodiment with centering on the third inner surface 109 and the four embodiments with the four possible combinations that involve simultaneous centering on two of the three inner surfaces 107, 108 and 109 or on all three together) are not illustrated.

The folding method may provide, in particular, for the processed capsules being of "tethered" type, i.e. capsules that remain connected to the container even after opening thereof. In particular, each capsule 100 may be provided with the protrusion 106 that extends laterally outwards from the capsule (in particular from the side wall 103 or from the guarantee band 104) and which, during the capsule conveying step, is arranged above the capsule-housing coupling and above the external lateral fixed guide 6 so as not to interfere with the inner surface 9 of the housing 3 of the star conveyor 2, or with the fixed guide 6.

The folding method may provide, in particular for the fixed guide 6 extending so as to interact with the capsules for a portion of the circumference arc with the centre at the rotation axis of the star conveyor and with a central angle of less than 120°, in particular with a central angle greater than 30°, especially with a central angle between 30° and 120°.

The folding method may provide, in particular, for the fixed guide 6 extending so as to interact with each capsule 100 at least until the locking element 7 locks the capsule 100 in a position centered between the locking element and the support plane 5.

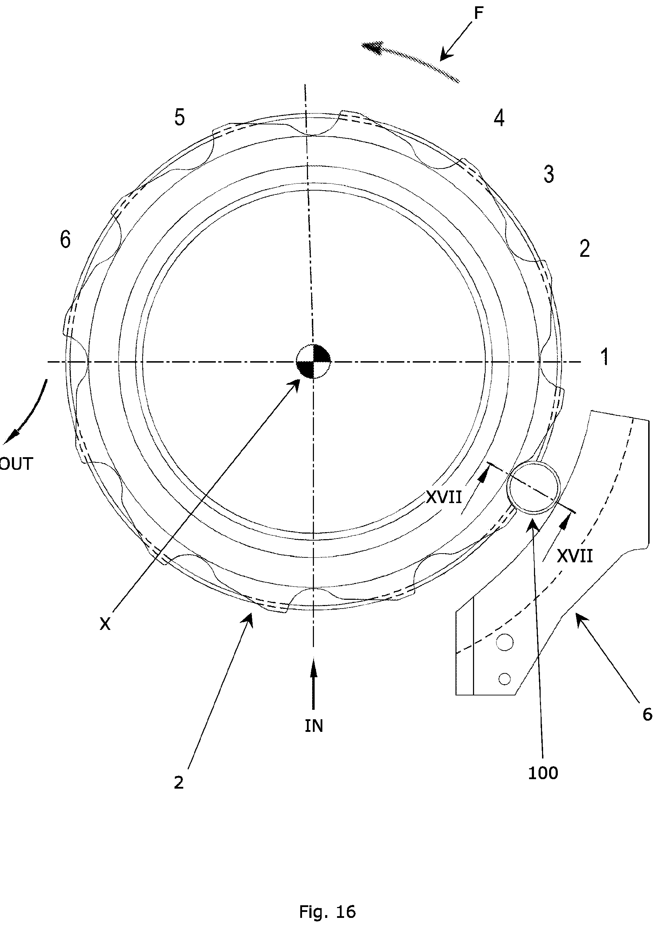

The folding method may provide, in particular, the following operating sequence in various points along the path (with reference to Figure 16).

At point 1 of Figure 16 of the path of the capsules the locking element 7 is still spaced apart from the end wall 102 of the capsule 100 in the housing 3 (situation corresponding to Figure 1 and to Figure 9).

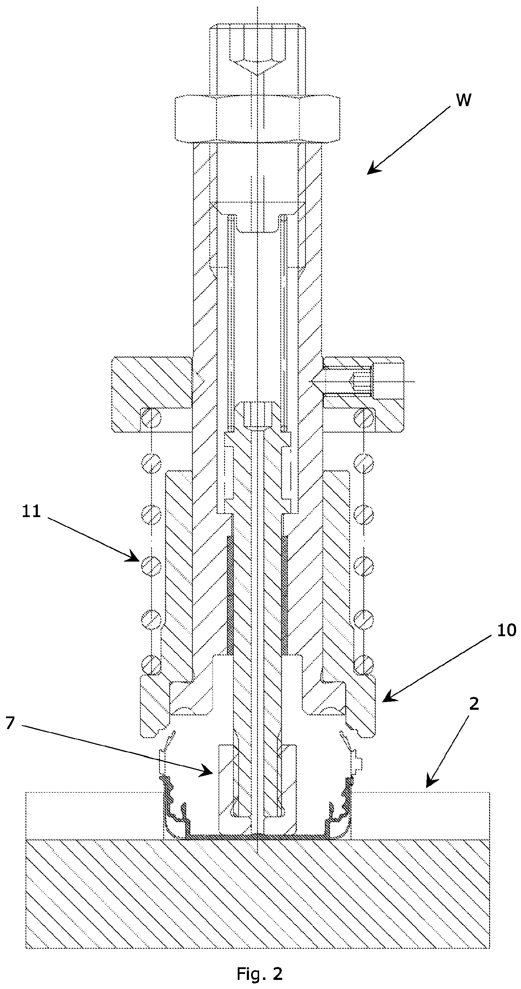

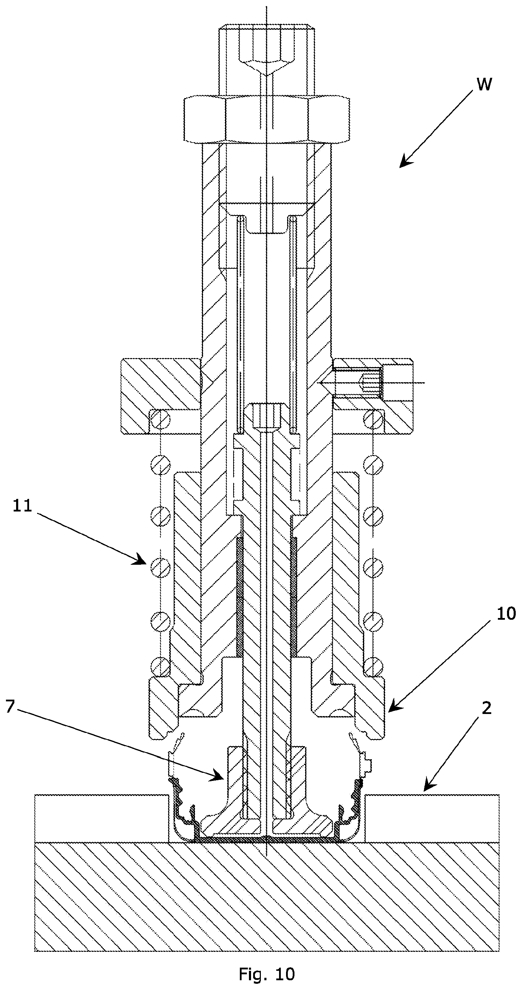

At point 2 of Figure 16 of the path of the capsules, after the folding unit W has approached the capsule 100 with an axial descent movement the locking element 7 comes to abut against the end wall102 to lock the capsule 100 against the support plane 5 (situation corresponding to Figure 2 and to Figure 10).

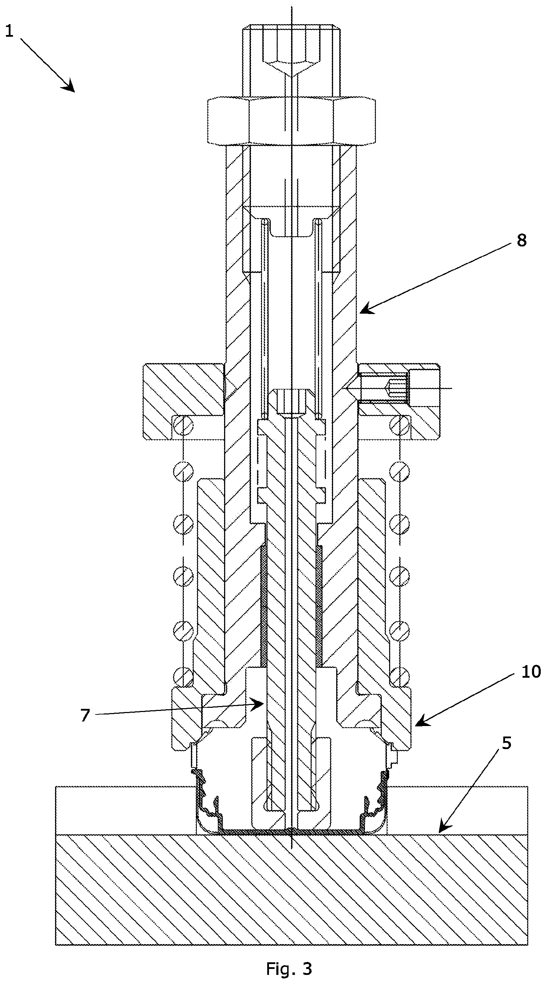

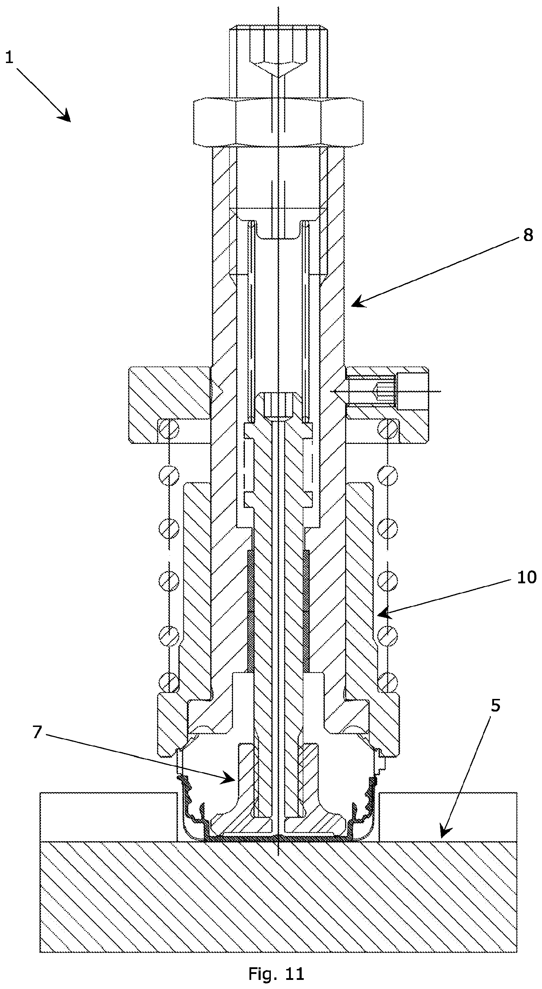

At point 3 of Figure 16 of the path of the capsules, after a part of folding unit W that includes the capsule-pressing element 10 and the folding element 8 has descended axially to the capsule 100, the capsule-pressing element 10 comes into contact with the upper edge of the capsule immediately outside the flap 105 (by starting a contact pressure that may be of elastic type owing to the action of the elastic means 11), to ensure stability and precision at the next flap-folding operation (see Figure 3 and Figure 11).

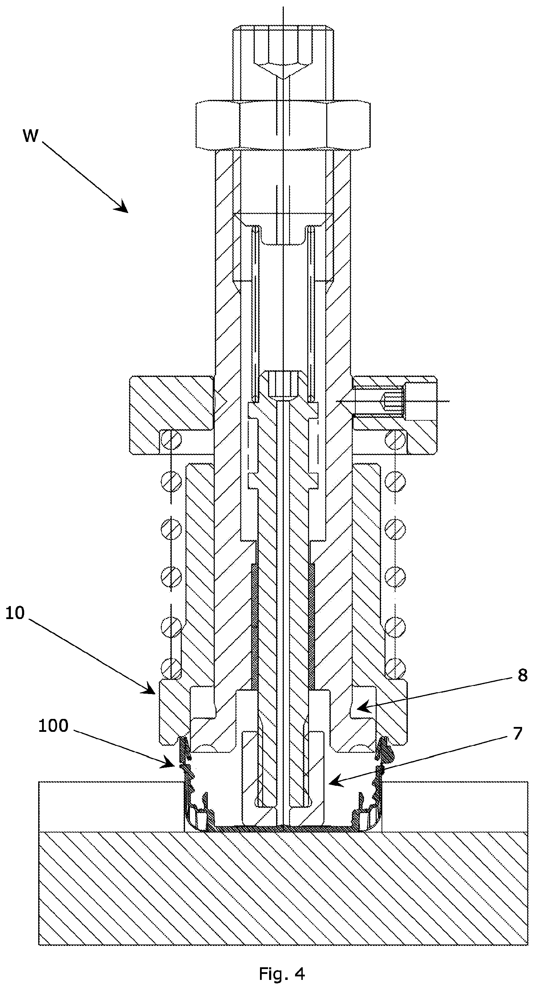

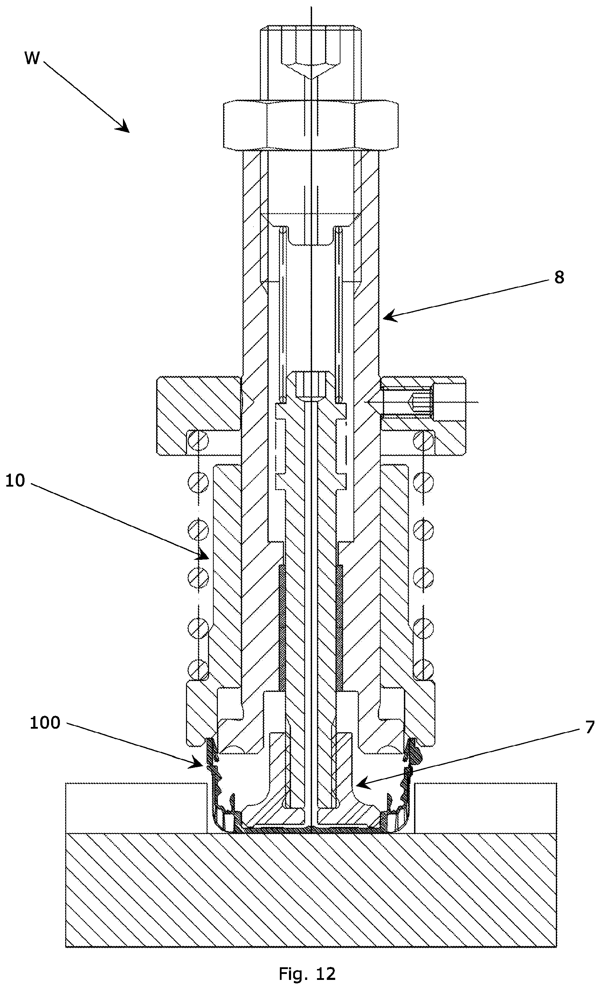

At point 4 of Figure 16 of the path of the capsules, the folding element 8 moves axially downwards with respect to the annular-shaped capsule-pressing element 10, beyond the locking element 7, which continues to keep the capsule 100 locked in position to fold the flap 105 (see Figure 4 and Figure 12).

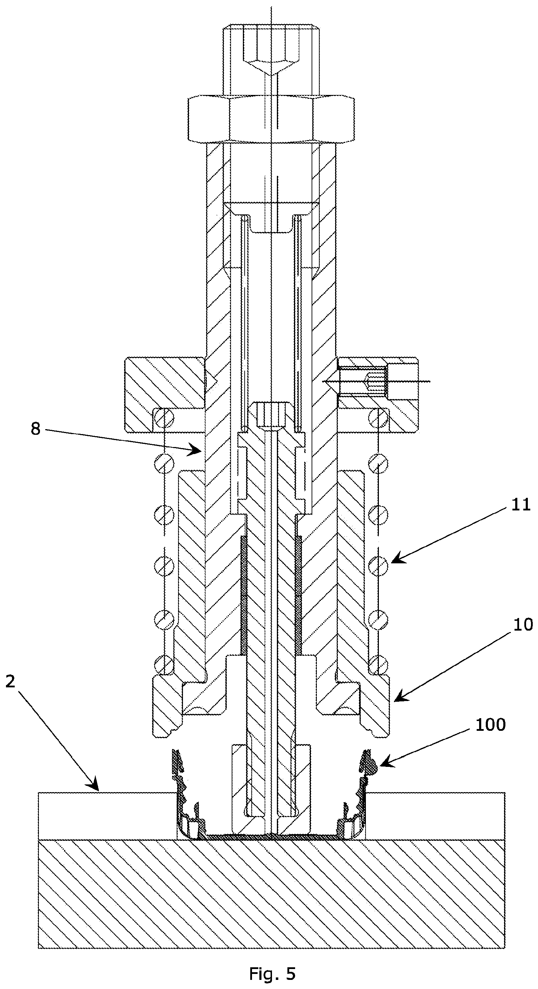

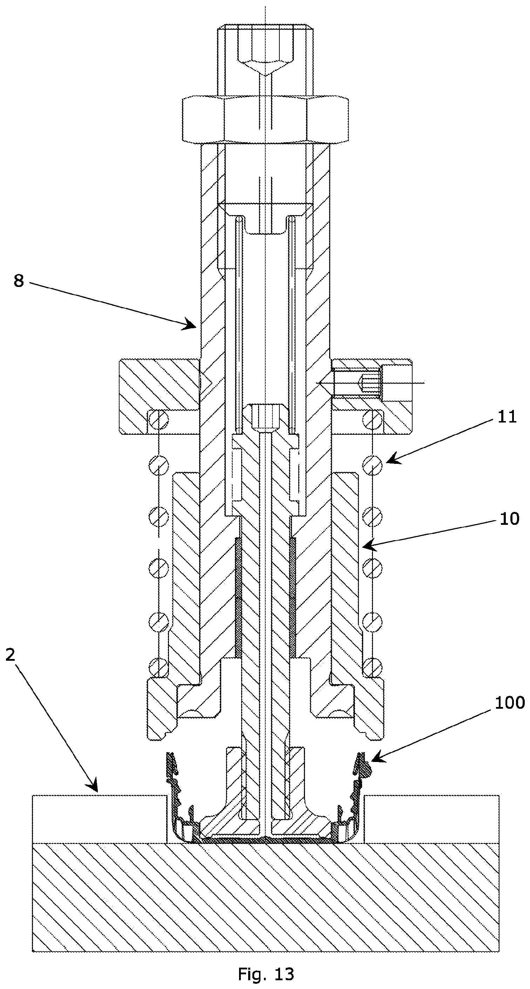

At point 5 of Figure 16 of the path of the capsules, the part of folding unit W that includes the capsule-pressing element 10 and the folding element 8 is commanded to rise axially upwards to move away from the capsule 100 (there is in particular an abutting surface of the folding element 8 that comes to abut against a corresponding abutting surface of the capsule-pressing element 10), whereas the locking element 7 is still in the position locking the capsule 100 against the support plane 5 (see Figure 5 and Figure 13).

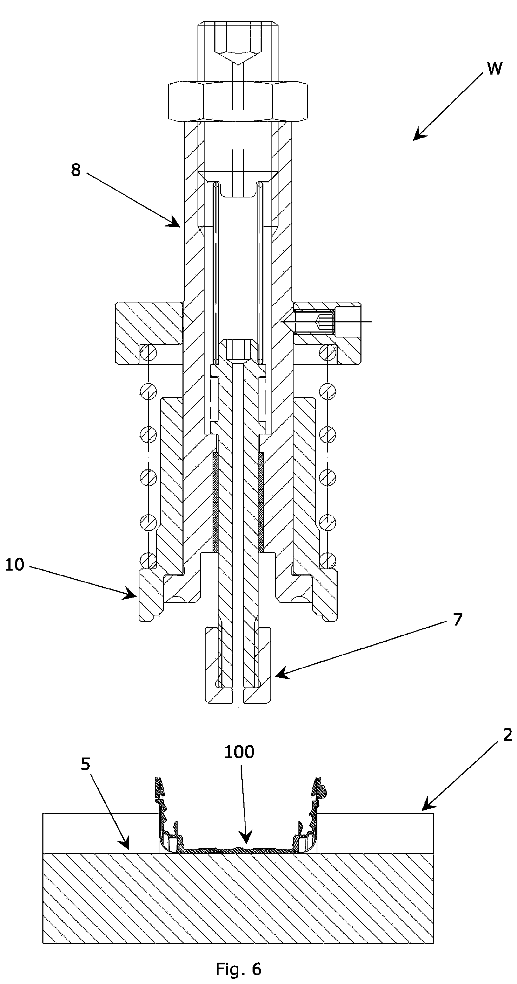

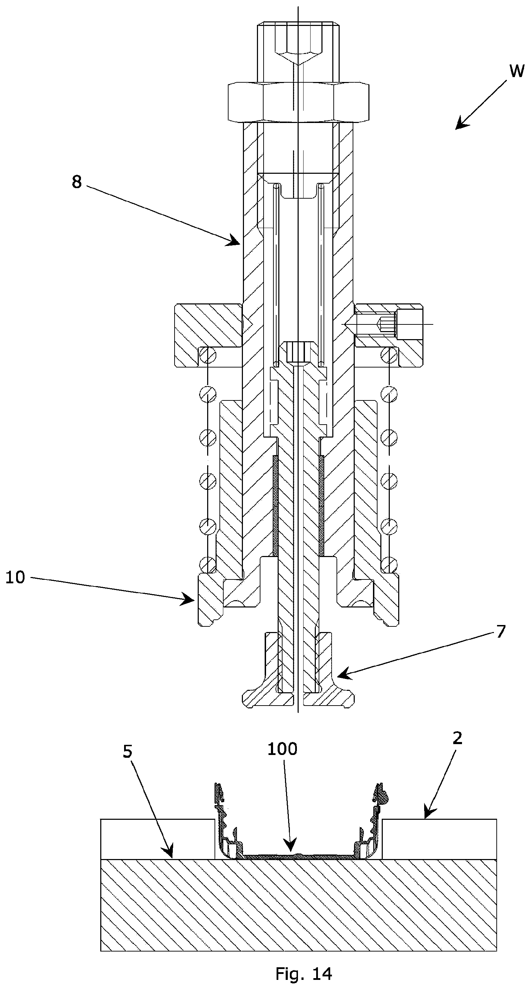

At point 6 of Figure 16 of the path of the capsules, the folding unit W is commanded to rise axially upwards to move away from the capsule 100 also the locking element 7 (see Figure 6 and Figure 14).

The folding method may provide, in particular, for the support plane 5 of the capsules, just like the star conveyor 2 that conveys the capsules 100 along the circular path, not being moved in a vertical direction.

This enables each capsule 100 not to be moved further after the capsule has been inserted into the housing 3 of the star conveyor 2 and suitably centered so as to align with precision the axis of the capsule 100 with the vertical axis of the folding unit W, so that the capsule 100 which is already centered does not risk getting misaligned when it meets the folding unit W (in particular when it meets the capsule-pressing element 10).

It is noted that the capsule 100, inserted into the housing 3, may be centered exactly with respect to the vertical axis of the folding unit W operationally associated with the housing 3, in particular (embodiment of Figures 1-6) owing to the precision coupling consisting of the capsule-housing coupling that, as has been seen, may be made with great precision. Alternatively, it is possible to achieve accurate centering owing to the precision coupling consisting of the capsule-element coupling.

The aforesaid movements in a vertical direction of the various elements of the folding unit W (locking element 7, folding element 8 and capsule-pressing element 10) are controlled (by control means that is not illustrated) in a manner controlled between one another during the rotational movement of the star conveyor 2, as disclosed above. The carousel may comprise, in particular, control means comprising cam profiles coupled with cam followers carried by the elements of the folding unit W and configured to command the aforesaid movements in a vertical direction.

Figure 16 shows a guide 6 of lateral containment of the capsules 100 that ends near the position indicated by 1, corresponding to the situation illustrated in Figures 1 and 9. It is nevertheless possible to provide for the guide of lateral containment of the capsules ending near the position indicated by 2 in Figure 16 (corresponding to the situation illustrated in Figures 2 and 10), or beyond the position indicated by 2 in Figure 16, i.e. when the capsule 100 has already been locked in position against the support plane 5 by the locking element 7.

## Claims

1. Method of folding, comprising the steps of:
- rotating a star conveyor (2) about a vertical rotation axis (X), wherein said star conveyor (2) comprises, on its periphery, angularly spaced apart housings (3) each comprising a lateral opening to receive a capsule (100);
- during said rotating step, feeding capsules (100) to said star conveyor (2), each capsule (100) comprising a cup-shaped body (101) with an end wall (102), a side wall (103) connected to said end wall (102) and a guarantee band (104) connected to said side wall (103) and provided with a flap (105) to be folded, each capsule (100) being fed to said star conveyor (2) with a concavity of said cup-shaped body (101) facing upwards, each capsule (100) being received in a housing (3) through the lateral opening;
- conveying each capsule (100), by means of said star conveyor (2), along a path from an inlet (IN), where said star conveyor (2) receives the capsules (100), to an outlet (OUT) where said star conveyor (2) releases the capsules (100), while the end wall (102) of the capsule rests on a horizontal support plane (5) which remains motionless in a vertical direction;
- during said conveying step, laterally guiding each capsule (100) by means of a fixed guide (6) shaped like a circumference arc and arranged outside said path along a portion of said path;
- during said conveying step inserting into each capsule (100) a locking element (7), said locking element (7) being inserted into the capsule (100) while performing a combined movement which includes a rotation together with the star conveyor (2) and a translation to approach the capsule (100) from top to bottom;
- for each capsule (100), during said conveying step, folding the flap (105) of the respective capsule downwards by means of an annular-shaped folding element (8) which folds the flap (105) while performing a combined movement which includes a rotation together with the star conveyor (2) and a translation from top to bottom to approach the capsule;
- for each capsule (100), during said conveying step and after said inserting and folding steps, moving said locking element (7) and folding element (8) away from said capsule to enable the capsule to come out;
**characterized in that**:
- said capsule (100) is received in the respective housing (3) with a capsule-housing coupling, between an outer surface of the side wall (103) of the capsule and an inner surface (9) of the housing which is configured for lateral containment of the capsule (100), with radial clearance less than 0.4 mm;
- said locking element (7) being inserted during said conveying step inside the cup-shaped body (101) against the end wall (102) of the respective capsule to lock the capsule (100) in position between said locking element (7) and said support plane (5).

2. Method according to claim 1, wherein said capsule-housing coupling is a precision coupling without radial clearance or with radial clearance less than 0.2 mm.

3. Method according to claim 1, wherein said locking element (7) is inserted inside the cup-shaped body (101) of the respective capsule with a capsule-element coupling between an inner surface (107; 108; 109) of the capsule (100) and an outer centering surface of the locking element (7), said capsule-element coupling being a precision coupling without radial clearance or with radial clearance less than 0.2 mm or with radial clearance less than 0.4 mm.

4. Method according to claim 3, wherein said inner surface of the capsule (100), which is coupled with an outer centering surface of the locking element (7), comprises an inner surface (107) of a gasket of said capsule (100), and/or an inner surface (108) of an axially projecting annular protrusion of said capsule (100), and/or an inner surface (109) of an internal thread of said capsule (100).

5. Method according to any one of the preceding claims, wherein said capsules (100) are of "tethered" type i.e. capsules that remain connected to the container even after opening thereof, each capsule (100) being provided with a protrusion (106) that extends laterally outwards from the capsule (100) and which, during said conveying step, is arranged above said capsule-housing coupling and above said guide (6) so as not to interfere with the star conveyor (2) or with the guide (6).

6. Method according to any one of the preceding claims, wherein said guide (6) extends so as to interact with the capsules (100) for a portion of the circumference arc with the centre at the rotation axis (X) of the star conveyor (2) with a central angle of less than 120°, especially with a central angle between 30° and 120°.

7. Method according to any one of the preceding claims, wherein said guide (6) extends so as to interact with each capsule (100) at least until said locking element (7) locks the capsule (100) in position between said locking element (7) and said support plane (5).

8. Method according to any one of the preceding claims, wherein each housing (3) is defined by said inner surface (9) intended for the lateral containment of the capsule (100), said inner surface (9) being shaped as a cylinder portion with a rear end (91) and a front end (92), where "rear" and "front" refers to a rotation direction (F) of the star conveyor (2), said lateral opening of each housing (3) being defined between said front end (92) and said rear end (91), said rear end (91) being more distant in a radial direction from said rotation axis (X) than said front end (92).

9. Use of a folding apparatus to implement a method according to any one of claims 1 to 8, said folding apparatus (1) comprising:
- a star conveyor (2) rotatable about a vertical rotation axis (X) and comprising, on its periphery, angularly spaced apart housings (3), each of which comprises a lateral opening configured to receive a capsule (100);
- a path which is defined by a rotation of said star conveyor (2) and which comprises an inlet (IN), where said star conveyor receives a capsule, and an outlet (OUT), where said star conveyor releases the capsule;
- a horizontal support plane (5) configured to remain motionless in a vertical direction and to support a capsule (100) received in a housing (3) of said star conveyor (2);
- a guide (6) shaped like a circumference arc and arranged along a portion of said path to laterally guide a capsule (100) received in a housing (3) of said star conveyor (2) and rotated along said path by said star conveyor;
- for each housing (3), a locking element (7) which can be inserted inside a capsule (100) received in the respective housing (3) to lock the capsule (100) in position between said locking element (7) and said support plane (5), in which said locking element (7) is configured to be inserted into the capsule (100) by performing a combined movement which includes a rotation together with the star conveyor (2) and a translation from top to bottom to approach the capsule (100) in the housing (3);
- for each housing (3), an annular shaped folding element (8) which can be inserted inside a capsule (100) received in the respective housing (3) to fold a flap (105) of a guarantee band (104) of the capsule downwards, in which said folding element (8) is configured to be inserted into the capsule (100) by performing a combined movement which includes a rotation together with the star conveyor (2) and a translation from top to bottom to approach the capsule (100) in the housing (3).

10. Use according to claim 9, wherein:
- said guide (6) extends for a portion of the circumference arc with the centre at the rotation axis (X) of the star conveyor (2) and with a central angle of less than 120°; and/or
- said guide (6) extends for a portion of path at least until said locking element (7) locks the capsule (100) in position between said locking element and said support plane (5).

11. Use according to claim 9 or 10, wherein each housing (3) of said star conveyor (2) is defined by an inner surface (9) intended for the lateral containment of a capsule (100), said inner surface (9) of lateral containment being shaped as a cylinder portion with a rear end (91) and a front end (92), where "rear" and "front" refers to a rotation direction (F) of said star conveyor (2), said lateral opening of each housing (3) being defined between said front end (92) and said rear end (91), a radial distance of said rear end (91) from said rotation axis (X) being greater than a radial distance of said front end (92) from said rotation axis (X).

12. Use according to any one of claims 9 to 11, wherein a vertical height (H) of each of said housings (3), as well as a vertical height (K) of said guide (6), is less than 10 millimeters so as to allow an external protrusion (106) of a capsule (100), in particular of the "tethered" type conveyed by said star conveyor (2), not to interfere, during conveying along said path, with the star conveyor (2) or with the guide (6).

13. Use according to any one of claims 9 to 12, comprising, for each housing (3), an annular-shaped capsule-pressing element (10) which surrounds the respective folding element (8) and which is capable of performing a combined movement which includes a rotation together with the star conveyor (2) and a translation from top to bottom to approach the capsule (100) in the housing (3) to interact in contact with an upper end of the capsule to promote the action of said folding element (8).

## Patentansprüche

1. Verfahren zum Falten, umfassend die Schritte:
- Drehen eines Sternförderers (2) um eine vertikale Drehachse (X), wobei der Sternförderer (2) an seinem Umfang winkelig voneinander beabstandete Aufnahmeräume (3) umfasst, die jeweils eine seitliche Öffnung umfassen, um eine Kapsel (100) aufzunehmen;
- während des Drehschritts, Zuführen von Kapseln (100) zu dem Sternförderer (2), wobei jede Kapsel (100) einen becherförmigen Körper (101) mit einer Stirnwand (102), einer mit der Stirnwand (102) verbundenen Seitenwand (103) und einem Garantieband (104) umfasst, das mit der Seitenwand (103) verbunden ist und mit einer zu faltenden Klappe (105) bereitgestellt wird, wobei jede Kapsel (100) dem Sternförderer (2) mit einer nach oben weisenden Konkavität des becherförmigen Körpers (101) zugeführt wird, wobei jede Kapsel (100) in einem Aufnahmeraum (3) durch die seitliche Öffnung aufgenommen wird;
- Fördern jeder Kapsel (100) mittels des Sternförderers (2) entlang eines Wegs von einem Einlass (IN), an dem der Sternförderer (2) die Kapseln (100) aufnimmt, zu einem Auslass (OUT), an dem der Sternförderer (2) die Kapseln (100) abgibt, während die Stirnwand (102) der Kapsel auf einer horizontalen Stützebene (5) aufliegt, die in einer vertikalen Richtung unbeweglich bleibt;
- während des Förderschritts, seitliches Führen jeder Kapsel (100) mittels einer feststehenden Führung (6), die wie ein Kreisbogen geformt und außerhalb des Wegs entlang eines Abschnitts des Wegs angeordnet ist;
- während des Förderschritts, Einsetzen eines Verriegelungselements (7) in jede Kapsel (100), wobei das Verriegelungselement (7) in die Kapsel (100) eingesetzt wird, während eine kombinierte Bewegung ausgeführt wird, die eine Drehung zusammen mit dem Sternförderer (2) und eine Translation zum Annähern an die Kapsel (100) von oben nach unten einschließt;
- für jede Kapsel (100), während des Förderschritts, Falten der Klappe (105) der jeweiligen Kapsel nach unten mittels eines ringförmigen Faltelements (8), das die Klappe (105) faltet, während eine kombinierte Bewegung ausgeführt wird, die eine Drehung zusammen mit dem Sternförderer (2) und eine Translation von oben nach unten zum Annähern an die Kapsel einschließt;
- für jede Kapsel (100), während des Förderschritts und nach den Schritten des Einsetzens und Faltens, Wegbewegen des Verriegelungselements (7) und Faltelements (8) von der Kapsel, um das Heraustreten der Kapsel zu ermöglichen;
**dadurch gekennzeichnet, dass**:
- die Kapsel (100) in dem jeweiligen Aufnahmeraum (3) mit einer Kapsel-Aufnahmeraum-Kopplung zwischen einer äußeren Oberfläche der Seitenwand (103) der Kapsel und einer inneren Oberfläche (9) des Aufnahmeraums, die für die seitliche Aufnahme der Kapsel (100) konfiguriert ist, mit einem radialen Spiel von weniger als 0,4 mm aufgenommen ist;
- wobei das Verriegelungselement (7) während des Förderschritts in den becherförmigen Körper (101) gegen die Stirnwand (102) der jeweiligen Kapsel eingeführt wird, um die Kapsel (100) zwischen dem Verriegelungselement (7) und der Stützebene (5) in ihrer Position zu verriegeln.

2. Verfahren nach Anspruch 1, wobei die Kapsel-Aufnahmeraum-Kopplung eine Präzisionskopplung ohne radiales Spiel oder mit einem radialen Spiel von weniger als 0,2 mm ist.

3. Verfahren nach Anspruch 1, wobei das Verriegelungselement (7) in den becherförmigen Körper (101) der jeweiligen Kapsel mit einer Kapsel-Element-Kopplung zwischen einer inneren Oberfläche (107; 108; 109) der Kapsel (100) und einer äußeren Zentrieroberfläche des Verriegelungselements (7) eingesetzt wird, wobei die Kapsel-Element-Kopplung eine Präzisionskopplung ohne radiales Spiel oder mit einem radialen Spiel von weniger als 0,2 mm oder mit einem radialen Spiel von weniger als 0,4 mm ist.

4. Verfahren nach Anspruch 3, wobei die innere Oberfläche der Kapsel (100), die mit einer äußeren Zentrieroberfläche des Verriegelungselements (7) gekoppelt ist, eine innere Oberfläche (107) einer Dichtung der Kapsel (100) und/oder eine innere Oberfläche (108) eines axial vorstehenden ringförmigen Vorsprungs der Kapsel (100) und/oder eine innere Oberfläche (109) eines Innengewindes der Kapsel (100) umfasst.

5. Verfahren nach einem der vorstehenden Ansprüche, wobei die Kapseln (100) vom Typ "tethered" sind, d. h. Kapseln, die auch nach deren Öffnen mit dem Behälter verbunden bleiben, wobei jede Kapsel (100) mit einem Vorsprung (106) versehen ist, der sich von der Kapsel (100) seitlich nach außen erstreckt und der während des Förderschritts oberhalb der Kapsel-Aufnahmeraum-Kopplung und oberhalb der Führung (6) angeordnet ist, um den Sternförderer (2) oder die Führung (6) nicht zu behindern.

6. Verfahren nach einem der vorstehenden Ansprüche, wobei sich die Führung (6) so erstreckt, dass sie mit den Kapseln (100) über einen Abschnitt des Kreisbogens mit dem Mittelpunkt an der Drehachse (X) des Sternförderers (2) mit einem Mittelpunktswinkel von weniger als 120°, insbesondere mit einem Mittelpunktswinkel zwischen 30° und 120°, zusammenwirkt.

7. Verfahren nach einem der vorstehenden Ansprüche, wobei sich die Führung (6) so erstreckt, dass sie mit jeder Kapsel (100) zusammenwirkt, zumindest bis das Verriegelungselement (7) die Kapsel (100) zwischen dem Verriegelungselement (7) und der Stützebene (5) in ihrer Position verriegelt.

8. Verfahren nach einem der vorstehenden Ansprüche, wobei jeder Aufnahmeraum (3) durch die innere Oberfläche (9) definiert ist, die für die seitliche Aufnahme der Kapsel (100) vorgesehen ist, wobei die innere Oberfläche (9) als ein Zylinderabschnitt mit einem hinteren Ende (91) und einem vorderen Ende (92) geformt ist, wobei sich "hinteres" und "vorderes" auf eine Drehrichtung (F) des Sternförderers (2) beziehen, wobei die seitliche Öffnung jedes Aufnahmeraums (3) zwischen dem vorderen Ende (92) und dem hinteren Ende (91) definiert ist, wobei das hintere Ende (91) in einer radialen Richtung weiter von der Drehachse (X) entfernt ist als das vordere Ende (92).

9. Verwendung einer Falteinrichtung zum Implementieren eines Verfahrens nach einem der Ansprüche 1 bis 8, wobei die Falteinrichtung (1) umfasst:
- einen Sternförderer (2), der um eine vertikale Drehachse (X) drehbar ist und an seinem Umfang winkelig voneinander beabstandete Aufnahmeräume (3) umfasst, von denen jeder eine seitliche Öffnung umfasst, die konfiguriert ist, um eine Kapsel (100) aufzunehmen;
- einen Weg, der durch eine Drehung des Sternförderers (2) definiert ist und einen Einlass (IN), an dem der Sternförderer eine Kapsel aufnimmt, und einen Auslass (OUT), an dem der Sternförderer die Kapsel abgibt, umfasst;
- eine horizontale Stützebene (5), die konfiguriert ist, um in einer vertikalen Richtung unbeweglich zu bleiben und eine Kapsel (100) zu stützen, die in einem Aufnahmeraum (3) des Sternförderers (2) aufgenommen ist;
- eine Führung (6), die wie ein Kreisbogen geformt und entlang eines Abschnitts des Wegs angeordnet ist, um eine Kapsel (100) seitlich zu führen, die in einem Aufnahmeraum (3) des Sternförderers (2) aufgenommen ist und durch den Sternförderer entlang des Wegs gedreht wird;
- für jeden Aufnahmeraum (3) ein Verriegelungselement (7), das in eine in dem jeweiligen Aufnahmeraum (3) aufgenommene Kapsel (100) eingeführt werden kann, um die Kapsel (100) in ihrer Position zwischen dem Verriegelungselement (7) und der Stützebene (5) zu verriegeln, wobei das Verriegelungselement (7) konfiguriert ist, um in die Kapsel (100) eingeführt zu werden, indem es eine kombinierte Bewegung durchführt, die eine Drehung zusammen mit dem Sternförderer (2) und eine Translation von oben nach unten zum Annähern an die Kapsel (100) in dem Aufnahmeraum (3) einschließt;
- für jeden Aufnahmeraum (3) ein ringförmiges Faltelement (8), das in das Innere einer in dem jeweiligen Aufnahmeraum (3) aufgenommenen Kapsel (100) eingesetzt werden kann, um eine Klappe (105) eines Garantiebandes (104) der Kapsel nach unten zu falten, wobei das Faltelement (8) konfiguriert ist, um in die Kapsel (100) eingesetzt zu werden, indem eine kombinierte Bewegung durchgeführt wird, die eine Drehung zusammen mit dem Sternförderer (2) und eine Translation von oben nach unten zum Annähern an die Kapsel (100) in dem Aufnahmeraum (3) einschließt.

10. Verwendung nach Anspruch 9, wobei:
- sich die Führung (6) über einen Abschnitt des Kreisbogens mit dem Mittelpunkt an der Drehachse (X) des Sternförderers (2) und mit einem Mittelpunktswinkel von weniger als 120° erstreckt und/oder
- sich die Führung (6) über einen Wegabschnitt erstreckt, zumindest bis das Verriegelungselement (7) die Kapsel (100) in ihrer Position zwischen dem Verriegelungselement und der Stützebene (5) verriegelt.

11. Verwendung nach Anspruch 9 oder 10, wobei jeder Aufnahmeraum (3) des Sternförderers (2) durch eine innere Oberfläche (9) definiert ist, die für die seitliche Aufnahme einer Kapsel (100) vorgesehen ist, wobei die innere Oberfläche (9) der seitlichen Aufnahme als ein Zylinderabschnitt mit einem hinteren Ende (91) und einem vorderen Ende (92) geformt ist, wobei sich "hinteres" und "vorderes" auf eine Drehrichtung (F) des Sternförderers (2) beziehen, wobei die seitliche Öffnung jedes Aufnahmeraums (3) zwischen dem vorderen Ende (92) und dem hinteren Ende (91) definiert ist, wobei ein radialer Abstand des hinteren Endes (91) von der Drehachse (X) größer als ein radialer Abstand des vorderen Endes (92) von der Drehachse (X) ist.

12. Verwendung nach einem der Ansprüche 9 bis 11, wobei eine vertikale Höhe (H) von jedem der Aufnahmeräume (3) sowie eine vertikale Höhe (K) der Führung (6) weniger als 10 Millimeter beträgt, um zu ermöglichen, dass ein äußerer Vorsprung (106) einer Kapsel (100), insbesondere von dem durch den Sternförderer (2) geförderten Typ "tethered", während des Förderns entlang des Wegs den Sternförderer (2) oder die Führung (6) nicht behindert.

13. Verwendung nach einem der Ansprüche 9 bis 12, umfassend, für jeden Aufnahmeraum (3), ein ringförmiges Kapselpresselement (10), das das jeweilige Faltelement (8) umgibt und das in der Lage ist, eine kombinierte Bewegung durchzuführen, die eine Drehung zusammen mit dem Sternförderer (2) und eine Translation von oben nach unten zum Annähern an die Kapsel (100) in dem Aufnahmeraum (3) einschließt, um in Kontakt mit einem oberen Ende der Kapsel zusammenzuwirken, um die Wirkung des Faltelements (8) zu unterstützen.

## Revendications

1. Procédé de pliage, comprenant les étapes consistant à:
- mettre en rotation un transporteur en étoile (2) autour d'un axe de rotation vertical (X), dans lequel ledit transporteur en étoile (2) comprend, sur sa périphérie, des logements (3) espacés angulairement comprenant chacun une ouverture latérale pour recevoir une capsule (100);
- pendant ladite étape de rotation, alimenter des capsules (100) audit transporteur en étoile (2), chaque capsule (100) comprenant un corps en forme de coupelle (101) avec une paroi d'extrémité (102), une paroi latérale (103) reliée à ladite paroi d'extrémité (102) et une bande de garantie (104) reliée à ladite paroi latérale (103) et pourvue d'un rabat (105) destiné à être plié, chaque capsule (100) étant alimentée audit transporteur en étoile (2) avec une concavité dudit corps en forme de coupelle (101) faisant face vers le haut, chaque capsule (100) étant reçue dans un logement (3) à travers l'ouverture latérale;
- transporter chaque capsule (100), au moyen dudit transporteur en étoile (2), le long d'un trajet allant d'une entrée (IN), où ledit transporteur en étoile (2) reçoit les capsules (100), à une sortie (OUT) où ledit transporteur en étoile (2) libère les capsules (100), alors que la paroi d'extrémité (102) de la capsule repose sur un plan de support horizontal (5) qui reste immobile dans une direction verticale;
- pendant ladite étape de transport, guider latéralement chaque capsule (100) au moyen d'un guide fixe (6) mis en forme comme un arc de circonférence et agencé à l'extérieur dudit trajet le long d'une partie dudit trajet;
- pendant ladite étape de transport insérer dans chaque capsule (100) un élément de verrouillage (7), ledit élément de verrouillage (7) étant inséré dans la capsule (100) tout en mettant en œuvre un mouvement combiné qui comporte une rotation conjointe avec le transporteur en étoile (2) et une translation pour rapprocher la capsule (100) de haut en bas;
- pour chaque capsule (100), pendant ladite étape de transport, plier le rabat (105) de la capsule respective vers le bas au moyen d'un élément de pliage (8) de forme annulaire qui plie le rabat (105) tout en mettant en œuvre un mouvement combiné qui comporte une rotation conjointe avec le transporteur en étoile (2) et une translation de haut en bas pour rapprocher la capsule;
- pour chaque capsule (100), pendant ladite étape de transport et après lesdites étapes d'insertion et de pliage, éloigner ledit élément de verrouillage (7) et l'élément de pliage (8) de ladite capsule pour permettre à la capsule de sortir;
**caractérisé en ce que**:
- ladite capsule (100) est reçue dans le logement (3) respectif avec un accouplement capsule-logement, entre une surface externe de la paroi latérale (103) de la capsule et une surface interne (9) du logement qui est conçu pour un confinement latéral de la capsule (100), avec un jeu radial inférieur à 0,4 mm;
- ledit élément de verrouillage (7) étant inséré pendant ladite étape de transport à l'intérieur du corps en forme de coupelle (101) contre la paroi d'extrémité (102) de la capsule respective pour verrouiller la capsule (100) en position entre ledit élément de verrouillage (7) et ledit plan de support (5).

2. Procédé selon la revendication 1, dans lequel ledit accouplement capsule-logement est un accouplement de précision dépourvu de jeu radial ou avec un jeu radial inférieur à 0,2 mm.

3. Procédé selon la revendication 1, dans lequel ledit élément de verrouillage (7) est inséré à l'intérieur du corps en forme de coupelle (101) de la capsule respective avec un accouplement capsule-élément entre une surface interne (107; 108; 109) de la capsule (100) et une surface de centrage externe de l'élément de verrouillage (7), ledit accouplement capsule-élément étant un accouplement de précision dépourvu de jeu radial ou avec un jeu radial inférieur à 0,2 mm ou avec un jeu radial inférieur à 0,4 mm.

4. Procédé selon la revendication 3, dans lequel ladite surface interne de la capsule (100), qui est accouplée à une surface de centrage externe de l'élément de verrouillage (7), comprend une surface interne (107) d'un joint d'étanchéité de ladite capsule (100), et/ou une surface interne (108) d'une partie saillante annulaire faisant saillie axialement de ladite capsule (100), et/ou une surface interne (109) d'un filetage interne de ladite capsule (100).

5. Procédé selon l'une quelconque des revendications précédentes, dans lequel lesdites capsules (100) sont de type « attachées » c'est-à-dire des capsules qui restent reliées au contenant même après ouverture de celui-ci, chaque capsule (100) étant pourvue d'une partie saillante (106) qui s'étend latéralement vers l'extérieur de la capsule (100) et qui, pendant ladite étape de transport, est agencée au-dessus dudit accouplement capsule-logement et au-dessus dudit guide (6) de façon à ne pas interférer avec le transporteur en étoile (2) ou avec le guide (6).

6. Procédé selon l'une quelconque des revendications précédentes, dans lequel ledit guide (6) s'étend de façon à interagir avec les capsules (100) sur une partie de l'arc de circonférence avec le centre au niveau de l'axe de rotation (X) du transporteur en étoile (2) avec un angle central inférieur à 120°, en particulier avec un angle central entre 30° et 120°.

7. Procédé selon l'une quelconque des revendications précédentes, dans lequel ledit guide (6) s'étend de façon à interagir avec chaque capsule (100) au moins jusqu'à ce que ledit élément de verrouillage (7) verrouille la capsule (100) en position entre ledit élément de verrouillage (7) et ledit plan de support (5).

8. Procédé selon l'une quelconque des revendications précédentes, dans lequel chaque logement (3) est défini par ladite surface interne (9) prévue pour le confinement latéral de la capsule (100), ladite surface interne (9) étant mise en forme en tant que partie de cylindre avec une extrémité arrière (91) et une extrémité avant (92), où « arrière » et « avant » font référence à une direction de rotation (F) du transporteur en étoile (2), ladite ouverture latérale de chaque logement (3) étant définie entre ladite extrémité avant (92) et ladite extrémité arrière (91), ladite extrémité arrière (91) étant plus distante dans une direction radiale dudit axe de rotation (X) que ladite extrémité avant (92).

9. Utilisation d'un appareil de pliage pour implémenter un procédé selon l'une quelconque des revendications 1 à 8, ledit appareil de pliage (1) comprenant:
- un transporteur en étoile (2) rotatif autour d'un axe de rotation vertical (X) et comprenant, sur sa périphérie, des logements (3) espacés angulairement, dont chacun comprend une ouverture latérale conçue pour recevoir une capsule (100);
- un trajet qui est défini par une rotation dudit transporteur en étoile (2) et qui comprend une entrée (IN), où ledit transporteur en étoile reçoit une capsule, et une sortie (OUT), où ledit transporteur en étoile libère la capsule;
- un plan de support horizontal (5) conçu pour rester immobile dans une direction verticale et pour supporter une capsule (100) reçue dans un logement (3) dudit transporteur en étoile (2);
- un guide (6) mis en forme comme un arc de circonférence et agencé le long d'une partie dudit trajet pour guider latéralement une capsule (100) reçue dans un logement (3) dudit transporteur en étoile (2) et mise en rotation le long dudit trajet par ledit transporteur en étoile;
- pour chaque logement (3), un élément de verrouillage (7) qui peut être inséré à l'intérieur d'une capsule (100) reçue dans le logement (3) respectif pour verrouiller la capsule (100) en position entre ledit élément de verrouillage (7) et ledit plan de support (5), dans lequel ledit élément de verrouillage (7) est conçu pour être inséré dans la capsule (100) en mettant en œuvre un mouvement combiné qui comporte une rotation conjointe avec le transporteur en étoile (2) et une translation de haut en bas pour rapprocher la capsule (100) dans le logement (3);
- pour chaque logement (3), un élément de pliage (8) de forme annulaire qui peut être inséré à l'intérieur d'une capsule (100) reçue dans le logement (3) respectif pour plier un rabat (105) d'une bande de garantie (104) de la capsule vers le bas, dans lequel ledit élément de pliage (8) est conçu pour être inséré dans la capsule (100) en mettant en œuvre un mouvement combiné qui comporte une rotation conjointe avec le transporteur en étoile (2) et une translation de haut en bas pour rapprocher la capsule (100) dans le logement (3).

10. Utilisation selon la revendication 9, dans laquelle:
- ledit guide (6) s'étend sur une partie de l'arc de circonférence avec le centre au niveau de l'axe de rotation (X) du transporteur en étoile (2) et avec un angle central inférieur à 120°; et/ou
- ledit guide (6) s'étend sur une partie du trajet au moins jusqu'à ce que ledit élément de verrouillage (7) verrouille la capsule (100) en position entre ledit élément de verrouillage et ledit plan de support (5).

11. Utilisation selon la revendication 9 ou 10, dans laquelle chaque logement (3) dudit transporteur en étoile (2) est défini par une surface interne (9) prévue pour le confinement latéral d'une capsule (100), ladite surface interne (9) de confinement latéral étant mise en forme en tant que partie de cylindre avec une extrémité arrière (91) et une extrémité avant (92), où « arrière » et « avant » font référence à une direction de rotation (F) dudit transporteur en étoile (2), ladite ouverture latérale de chaque logement (3) étant définie entre ladite extrémité avant (92) et ladite extrémité arrière (91), une distance radiale de ladite extrémité arrière (91) à partir dudit axe de rotation (X) étant supérieure à une distance radiale de ladite extrémité avant (92) par rapport audit axe de rotation (X).

12. Utilisation selon l'une quelconque des revendications 9 à 11, dans laquelle une hauteur verticale (H) de chacun desdits logements (3), ainsi qu'une hauteur verticale (K) dudit guide (6), est inférieure à 10 millimètres de façon à permettre à une partie saillante externe (106) d'une capsule (100), en particulier du type « attachée » transportée par ledit transporteur en étoile (2), de ne pas interférer, pendant le transport le long dudit trajet, avec le transporteur en étoile (2) ou avec le guide (6).

13. Utilisation selon l'une quelconque des revendications 9 à 12, comprenant, pour chaque logement (3), un élément de pressage de capsule (10) de forme annulaire qui entoure l'élément de pliage (8) respectif et qui est capable de mettre en œuvre un mouvement combiné qui comporte une rotation conjointe avec le transporteur en étoile (2) et une translation de haut en bas pour rapprocher la capsule (100) dans le logement (3) pour interagir en contact avec une extrémité supérieure de la capsule pour favoriser l'action dudit élément de pliage (8).
